# EUROPÄISCHE PATENTSCHRIFT

(11) **EP 3 286 988 B1**
(45) Veröffentlichungstag und Bekanntmachung des Hinweises auf die Patenterteilung: **06.09.2023**
(21) Anmeldenummer: 16716249.4
(22) Anmeldetag: 14.04.2016
(51) Int. Cl.: H05B 45/48

(54) **SCHALTUNGSANORDNUNG ZUM BETREIBEN MINDESTENS EINES ERSTEN UND EINES ZWEITEN LED-STRANGS**
CIRCUIT ARRANGEMENT FOR OPERATING AT LEAST ONE FIRST AND ONE SECOND LED STRAND
AGENCEMENT DE CIRCUIT POUR FAIRE FONCTIONNER AU MOINS UNE PREMIÈRE ET UNE DEUXIÈME LIGNE DE DEL

(30) Priorität: 20.04.2015 DE 102015207144
(43) Veröffentlichungstag der Anmeldung: 28.02.2018
(73) Patentinhaber: Inventronics GmbH, 85748 Garching b. München (DE)
(72) Erfinder: SEIDER, Andreas, 84419 Obertaufkirchen (DE); ENDRES, Helmut, 86441 Zusmarshausen (DE)
(74) Vertreter: OSRAM GmbH - GC IP
(86) Internationale Anmeldenummer: PCT/EP2016/058289
(87) Internationale Veröffentlichungsnummer: WO 2016/169839

(56) Entgegenhaltungen:
- WO-A1-2014/005983
- DE-A1-102012 207 457
- DE-A1-102013 201 439
- US-A1- 2010 134 018
- US-A1- 2013 187 551
- US-A1- 2013 313 987

## Beschreibung

### Technisches Gebiet

Die vorliegende Erfindung betrifft eine Schaltungsanordnung zum Betreiben mindestens eines ersten und eines zweiten LED-Strangs umfassend einen Eingang mit einem ersten und einem zweiten Eingangsanschluss zum Koppeln mit einer gleichgerichteten Versorgungswechselspannung, eine Spannungsausgleichslängsimpedanz und eine Spannungsteilereinrichtung, welche zwischen den ersten und den zweiten Eingangsanschluss geschaltet ist zur Bereitstellung eines Steuersignals an die Spannungsausgleichslängsimpedanz. Die Schaltungsanordnung umfasst weiterhin zumindest eine erste und eine zweite Lastuntergruppe mit jeweils einem ersten und einem zweiten Anschluss, wobei jeweils zwischen den ersten und den zweiten Anschluss ein Überbrückungselement geschaltet ist und mit jeweils einem als Vierpol mit einem ersten und einem zweiten Primäranschluss sowie mit einem ersten und einem zweiten Sekundäranschluss ausgebildeten Koppelelement, wobei der erste Primäranschluss mit dem ersten Anschluss sowie der zweite Primäranschluss mit dem zweiten Anschluss elektrisch leitend verbunden ist. Der erste LED-Strang, welcher eine erste Anzahl von in Reihe geschalteten LEDs aufweist, ist zwischen die Sekundäranschlüsse des Koppelelements der ersten Lastuntergruppe und der zweite LED-Strang, welcher eine zweite Anzahl von in Reihe geschalteten LEDs aufweist, ist zwischen die Sekundäranschlüsse des Koppelelements der zweiten Lastuntergruppe geschaltet. Eine Steuereinrichtung ist dazu ausgelegt, die Überbrückungselemente in Abhängigkeit von einer Spannungsdifferenz zwischen dem jeweils zugehörigen ersten Anschluss und einer auf den zweiten Eingangsanschluss bezogenen Hilfsgleichspannungsquelle sowie in Abhängigkeit von einer jeweiligen LED-Strang-Spannung zu steuern, welche zwischen dem ersten und dem zweiten Anschluss anliegt, wenn das jeweils zugehörige Überbrückungselement einen Kurzschluss-Stromfluss zwischen den beiden Anschlüssen sperrt. Dabei ist jeweils der zweite Anschluss einer höher gelegenen Lastuntergruppe, welche nicht eine tiefstgelegene Lastuntergruppe ist, mit dem ersten Anschluss einer jeweils nächst tiefer gelegenen Lastuntergruppe elektrisch leitend verbunden, der erste Anschluss einer höchstgelegenen Lastuntergruppe ist mit dem ersten Eingangsanschluss elektrisch gekoppelt, und zwischen dem zweiten Anschluss einer tiefstgelegenen Lastuntergruppe und dem zweiten Eingangsanschluss ist die Spannungsausgleichslängsimpedanz geschaltet.

### Stand der Technik

Leuchtmittel auf der Basis von Leuchtdioden (LED) sind innerhalb weniger Jahre zu einer konkurrenzfähigen Alternative zu traditionellen Leuchtmitteln, beispielsweise Glühlampen, Halogenlampen oder (Kompakt-) Leuchtstofflampen, herangereift. Für den Betrieb der mit einer vergleichsweise niedrigen Flussspannung arbeitenden LEDs an einem Wechselspannungsnetz mit beispielsweise 240 Volt Nennspannung sind verschiedene Schaltungskonzepte verfügbar, je nach Anforderungen der entsprechenden Anwendung. Insbesondere bei Anwendungen, bei welchen eine elektrische Isolation der Leuchtdioden von dem speisenden Netz nicht gefordert ist (Non-SELV), sind hohe Effizienzwerte der Leuchtmittel erreichbar.

Aus der WO 2014 005983 A1 ist ein Verfahren zur Ansteuerung von Leuchtdioden bekannt, bei welchem eine Kette von in Reihe geschalteten Leuchtdioden bereitgestellt wird, welche in Segmente unterteilt ist, wobei jedes Segment mehrere Leuchtdioden beinhalten kann und wobei die Kette mit einer aus einer sinusförmigen Netzwechselspannung gleichgerichteten Eingangswechselspannung derart betrieben wird, dass die Segmente in Abhängigkeit der Amplitude der Eingangswechselspannung nacheinander zu- und abgeschaltet werden. Zusätzlich zu diesem bekannten Verfahren wird der Strom durch die LED-Kette in seinen positiven wie negativen Spitzenwerten begrenzt, um ein vom Menschen wahrnehmbares Flackern zu verringern.

Aus der DE 10 2013 201 439 A1 ist eine Schaltungsanordnung zum Betreiben mindestens einer ersten und einer zweiten Kaskade von LEDs bekannt, bei welcher die LED-Kaskaden eine unterschiedliche Anzahl von LEDs aufweisen und durch eine geeignete Ansteuerlogik an den Momentanwert der gleichgerichteten Versorgungswechselspannung angepasst abwechselnd betrieben werden. Weiterhin ist ein Spannungsteiler vorgesehen, der zwischen den ersten und den zweiten Eingangsanschluss gekoppelt ist, wobei der Abgriff des Spannungsteilers mit dem Eingang eines seriell zu den LED-Kaskaden gekoppelten Linearreglers gekoppelt ist. Durch diese Maßnahme kann eine Stromaufnahme der Schaltungsanordnung von der jeweiligen Phasenlage der gleichgerichteten Versorgungswechselspannung abhängig gemacht werden. Hierdurch können die Vorgaben hinsichtlich eines Oberwellengehalts des aus dem speisenden Netz entnommenen Stroms und damit eines Powerfaktors erfüllt werden. Bedingt durch die Art der Ansteuerung des Linearreglers ergibt sich somit auch eine direkte Abhängigkeit des Stroms durch die einzelnen LEDs von der Höhe der speisenden Netzspannung. Weiterhin ergibt sich für die LEDs, welche im Bereich höherer Momentanwerte der Netzspannung angesteuert werden, eine deutlich höhere mittlere Strombelastung als für LEDs, welche beispielsweise einer untersten Stufe zugeordnet sind und gleichmäßiger über die gesamte Breite einer Netzspannungshalbwelle zugeschaltet ist.

### Darstellung der Erfindung

Es ist daher Aufgabe der vorliegenden Erfindung, eine Schaltungsanordnung bereitzustellen, mit der eine gleichmäßigere Bestromung der LEDs der jeweiligen LED-Stränge ermöglicht wird.

Diese Aufgabe wird gelöst durch eine Schaltungsanordnung mit den Merkmalen des Patentanspruchs 1. Vorteilhafte Weiterbildungen der vorliegenden Erfindung sind Gegenstand der abhängigen Patentansprüche.

Die vorliegende Erfindung basiert auf der Erkenntnis, dass sich bei einer aus dem Stand der Technik bekannten Schaltungsanordnung, welche hinsichtlich einer Optimierung des Powerfaktors ausgestaltet ist, ein erhebliches Ungleichgewicht der Strombelastung der einzelnen LED-Stränge ergibt. Bei der Verwendung von identischen LED-Bauelementen für den Aufbau der einzelnen LED-Stränge ergeben sich somit Helligkeitsunterschiede in den einzelnen LED-Strängen, welche insbesondere bei großflächigen LED-Segmenten störend wahrgenommen werden können. Die Erfinder haben erkannt, dass es möglich ist, auch mit einer gekappten Sinusform des Stroms durch die Schaltungsanordnung die für das entsprechende Leuchtmittel, bei dem die erfindungsgemäße Schaltungsanordnung eingesetzt wird, die Grenzwerte der entsprechenden Vorschriften und Regelungen zum Oberwellengehalt des aufgenommenen Stroms einzuhalten.

Gemäß der Erfindung wird eine gattungsgemäße Schaltungsanordnung derart weitergebildet, dass die Spannungsteilereinrichtung dazu ausgelegt ist, mittels des Steuersignals einen Strom mit einem Stromwert, welcher in einem ersten Zustand proportional zu einem Spannungswert der gleichgerichteten Versorgungswechselspannung und in einem zweiten Zustand gleich einem vorgebbaren Stromgrenzwert ist, durch die seriell gekoppelten Lastuntergruppen zu steuern.

Durch eine Kappung oder Deckelung des in dem ersten Zustand sinusförmigen Verlaufs in dem zweiten Zustand ergibt sich somit zweckmäßig in dem Bereich, in welchem der LED-Strang der höchstgelegenen Lastuntergruppe aktiv zugeschaltet ist, das heißt der LED-Strang zumindest teilweise von dem durch die Spannungsausgleichslängsimpedanz eingeprägten Strom durchflossen wird, ein konstanter und damit nicht mehr mit dem Verlauf der Sinusspannung noch weiter ansteigender Verlauf des Stroms. Überdies ergibt sich ein weiterer Vorteil der erfindungsgemäßen Schaltungsanordnung, wenn der durch die Spannungsteilereinrichtung eingeprägte Strom nicht weiter mit einem Verlauf der Versorgungswechselspannung ansteigt. Dann reduzieren sich insbesondere im Fall der Verwendung eines Linearreglers in der Spannungsausgleichslängsimpedanz die darin entstehenden Verluste, weil in diesem Fall der Zustand des höchsten auftretenden Spannungswerts über der Spannungsausgleichslängsimpedanz und der Strom durch die Spannungsausgleichslängsimpedanz nicht mehr im Maximum der gleichgerichteten Versorgungswechselspannung zusammenfallen. Somit können durch die erfindungsgemäße Schaltungsanordnung sowohl eine gleichmäßigere Bestromung der einzelnen LEDs in den LED-Strängen erzielt werden als auch die Anforderungen hinsichtlich der Netzstromoberwellen entsprechend den für eine jeweilige Leistungsklasse von Leuchtmitteln geltenden Vorschriften eingehalten werden.

In einer vorteilhaften Weiterbildung umfasst das Koppelelement eine Diode, welche zwischen den ersten Primäranschluss und den ersten Sekundäranschluss oder zwischen den zweiten Primäranschluss und den zweiten Sekundäranschluss geschaltet ist, und einen Kondensator, welcher zwischen den ersten Sekundäranschluss und den zweiten Sekundäranschluss geschaltet ist. Dadurch ergibt sich der Vorteil, dass mittels des Kondensators der zwischen den jeweiligen ersten Sekundäranschluss und den zweiten Sekundäranschluss geschaltete LED-Strang auch während der Zeit bestromt wird, während das zugehörige Überbrückungselement einen Kurzschluss-Stromfluss zwischen den beiden Anschlüssen ermöglicht. In dieser Phase wird der LED-Strang mit der in dem Kondensator gespeicherten elektrischen Energie versorgt. In Abhängigkeit von der Größe dieses Kondensators kann somit eine Modulation des Lichtstroms des jeweiligen LED-Strangs deutlich reduziert werden. Insbesondere entfallen die Phasen, in denen der jeweilige LED-Strang aufgrund des parallelen anliegenden Kurzschlusses nicht bestromt wird und somit kein Licht emittiert, mit anderen Worten würde in diesem Fall der Lichtstrom bis auf Null reduziert. Ein derartiger, stark modulierter Lichtstrom kann als störend empfunden werden, beispielsweise durch den Perlschnureffekt bei einer relativen Bewegung des Betrachters und der Lichtquelle zueinander. Dieser Effekt ist beispielsweise aus der Ansteuerung von LEDs mittels Pulsweitenmodulation (PWM) bekannt. Um ein Entladen des Kondensators durch einen mittels des jeweiligen Überbrückungselements bereitgestellten Kurzschlusses zu verhindern, ist die Diode vorgesehen. Die Diode dient somit zum Koppeln des LED-Strangs mit den beiden Anschlüssen der Lastuntergruppe während einer Sperrphase des Überbrückungselements, wobei die Diode und sämtliche LEDs des zugehörigen LED-Strangs in Flussrichtung betrieben werden; wohingegen während einer Leitend-Phase des Überbrückungselements die Diode in Sperrrichtung betrieben wird und weiterhin alle LEDs des jeweiligen LED-Strangs aus dem Kondensator gespeist weiterhin in Flussrichtung betrieben werden.

Alternativ kann auch vorgesehen sein, dass das Koppelelement zwischen dem ersten Primäranschluss und dem ersten Sekundäranschluss eine leitende Verbindung aufweist sowie zwischen dem zweiten Primäranschluss und dem zweiten Sekundäranschluss eine elektrisch leitende Verbindung aufweist, welche jeweils eine niederohmige Verbindung, insbesondere einen Kurzschluss bereitstellen. In diesem Fall ist ein Kondensator zwischen dem zweiten Primäranschluss und dem zweiten Sekundäranschluss nicht vorgesehen. Der zugehörige LED-Strang wird in diesem Fall vollständig durchmoduliert betrieben, das heißt in der Phase, in der das Überbrückungselement einen Kurzschluss bereitstellt, nimmt der Strom durch den LED-Strang den Wert Null an. Eine derartige Ausgestaltung des Koppelelements kann zweckmäßig sein, wenn in dem LED-Strang LED-Bauelemente zum Einsatz kommen, welche einen Leuchtstoff mit ausreichender Nachleuchtdauer umfassen. In diesem Fall kann auf eine Filterung beziehungsweise Glättung auf der elektrischen Seite der LED verzichtet werden, da hier die Modulation des emittierten Lichts durch den Leuchtstoff selbst, also auf der nicht-elektrischen Seite der LED, bewirkt wird.

In einer weiteren vorteilhaften Ausführungsform ist die Spannungsteilereinrichtung dazu ausgelegt, im Zusammenwirken mit der Steuereinrichtung den zweiten Zustand jedenfalls dann einzustellen, wenn das Überbrückungselement der höchstgelegenen Lastuntergruppe sperrend geschaltet ist oder wenn beide Überbrückungselemente der höchstgelegenen und der dazu nächst tiefer gelegenen Lastuntergruppe sperrend geschaltet sind. Das Einstellen des zweiten Zustands und damit das Konstanthalten des Stroms durch die Spannungsausgleichslängsimpedanz und durch die seriell gekoppelten Lastuntergruppen ist gerade dadurch von besonderem Vorteil, weil bei einer Ansteuerung gemäß dem Stand der Technik gerade die höchstgelegene Lastuntergruppe den größten mittleren Strom führen muss.

In einer weiteren vorteilhaften Ausführungsform ist die Spannungsteilereinrichtung dazu ausgelegt, den zweiten Zustand dann einzustellen, wenn der Spannungswert der gleichgerichteten Versorgungswechselspannung einen vorgebbaren Spannungsgrenzwert übersteigt. Eine solche Funktionalität lässt sich mit einfachen Mitteln implementieren und bietet darüber hinaus den Vorteil, dass eine Stetigkeit des Stromwerts beim Übergang von dem ersten Zustand in den zweiten Zustand inhärent dadurch erzielt werden kann, dass der begrenzende Eingriff an der Spannungsteilereinrichtung selbst erfolgt und ein stetiges Ausgangssignal zur Folge hat.

Bevorzugt ist der vorgebbare Spannungsgrenzwert in einem Nennbetriebszustand der Schaltungsanordnung kleiner als ein Scheitelwert der Versorgungswechselspannung. Hierdurch wird die Schaltungsanordnung in dem Nennbetriebszustand, in dem ein Leuchtmittel mit der darin integrierten Schaltungsanordnung bei einer vorgesehenen Spannung und einer vorgesehenen aufgenommenen Leistung betrieben wird, mit einem Netzstrom betrieben, der eine Sinusform mit gekappten beziehungsweise gedeckelten Spitzen aufweist. Neben der positiven Auswirkung auf die gleichmäßigere Bestromung der LED-Stränge ergibt sich hieraus weiterhin die Möglichkeit, bei Änderungen der Höhe der Versorgungswechselspannung, beispielsweise eines Effektivwertes, den Strom durch die Lastuntergruppen anzupassen und dadurch eine konstante Leistungsaufnahme aus dem Netz bereitzustellen. Insbesondere kann einem Absinken des von dem Leuchtmittel abgegebenen Lichtstroms bei sinkender Versorgungswechselspannung entgegengewirkt werden, indem in diesem Fall die Stromgrenze in dem zweiten Zustand erhöht wird.

Besonders bevorzugt ist der Übergang von dem ersten Zustand in den zweiten Zustand durch einen stetigen, das heißt nahtlos ohne Sprung anschließenden Verlauf des Stroms durch die Spannungsausgleichslängsimpedanz charakterisiert.

In einer weiteren bevorzugten Ausführungsform weist die Spannungsausgleichslängsimpedanz einen ersten Widerstand auf, welcher elektrisch leitend mit dem zweiten Eingangsanschluss verbunden ist, und von dem Strom durch die Lastuntergruppen durchflossen ist. Durch den Potentialbezug auf den zweiten Eingangsanschluss ergibt sich somit eine besonders einfache Möglichkeit der Ansteuerung mit einem gemeinsamen Potentialbezug auf den zweiten Eingangsanschluss der weiteren für die Steuerung der Schaltungsanordnung relevanten Funktionsgruppen, beispielsweise der Spannungsteilereinrichtung oder der Steuereinrichtung. Der erste Widerstand dient vorteilhafterweise in einer ersten Funktion als Gegenkopplungswiderstand der Spannungsausgleichslängsimpedanz und in einer zweiten Funktion als Messwiderstand zur Bereitstellung eines zu dem Strom durch die Spannungsausgleichslängsimpedanz proportionalen Spannungswerts, welcher an eine übergeordnete Regelung zur Einstellung des Stroms durch die Spannungsausgleichslängsimpedanz bereitstellbar ist.

In einer weiteren vorteilhaften Ausführungsform ist durch die Spannungsausgleichslängsimpedanz in Verbindung mit der Spannungsteilereinrichtung ein Stromspiegel ausgebildet. Insbesondere kann ein durch einen Fußwiderstand der Spannungsteilereinrichtung, welcher elektrisch leitend mit dem zweiten Eingangsanschluss verbunden ist, fließender Strom im Verhältnis des Fußwiderstands zu dem ersten Widerstand in der Spannungsausgleichslängsimpedanz abgebildet werden. Dadurch lässt sich besonders einfach die Abhängigkeit des gesteuerten Stroms durch die Spannungsausgleichslängsimpedanz in Abhängigkeit von der gleichgerichteten Versorgungswechselspannung bereitstellen.

Erfindungsgemäß weist die Spannungsteilereinrichtung einen Steueranschluss zur Beeinflussung, insbesondere Begrenzung, des Steuersignals auf. Bevorzugt kann der Steueranschluss durch eine Anzapfung einer Spannungsteilerkette innerhalb der Spannungsteilereinrichtung gegeben sein, wobei die Spannungsteilerkette zwischen den ersten und den zweiten Eingangsanschluss gekoppelt ist. Vorzugsweise umfasst die Spannungsteilerkette in Serie verschaltete Widerstände und Dioden, welche in Flussrichtung betrieben sind.

Erfindungsgemäß weist die Spannungsteilereinrichtung einen ersten Tiefpassfilter auf, welcher ausgangsseitig mit dem Steueranschluss gekoppelt ist. Bevorzugt kann der Koppelpfad zwischen dem ersten Tiefpassfilter und dem Steueranschluss elektrische Bauelemente wie beispielsweise Widerstände und Kondensatoren aufweisen. Insbesondere kann der Koppelpfad zumindest eine Diode, einen Transistor oder einen Operationsverstärker oder einen Komparator aufweisen.

Über den ersten Tiefpassfilter kann ein Analogsteuersignal auf den Steueranschluss gekoppelt werden, ebenso kann vorgesehen sein, über den ersten Tiefpassfilter ein PWM-Steuersignal auf den Steueranschluss zu koppeln. Besonders vorteilhaft ist hierbei das Analogsteuersignal proportional zu einem einzustellenden Strom durch die Spannungsausgleichslängsimpedanz, insbesondere durch den ersten Widerstand, beziehungsweise im Fall eines PWM-Steuersignals ist ein Tastverhältnis (duty cycle), das heißt der Quotient aus der Dauer, in der das PWM-Steuersignal einen als Ein definierten Zustand aufweist, im Verhältnis zu der gesamten Periode des PWM-Steuersignals ebenfalls proportional zu einem einzustellenden Strom durch die Spannungsausgleichslängsimpedanz. Ein PWM-Steuersignal mit einer konstanten Amplitude, die insbesondere alternierend zwischen genau zwei gleichbleibenden Signalpegeln betrieben wird, kann durch Filterung mittels eines Tiefpasses in ein quasi kontinuierliches Analog-Steuersignal umgeformt werden, dessen Stufen lediglich von der Auflösung des PWM-Steuersignals abhängig sind. Somit kann auch vorgesehen sein, dass an dem ersten Tiefpassfilter sowohl ein PWM-Steuersignal als auch ein Analog-Steuersignal anschließbar ist.

In einer weiteren vorteilhaften Ausführungsform ist eine Regeleinheit mit dem Steueranschluss elektrisch gekoppelt, wobei ein Istwerteingang der Regeleinheit über einen zweiten Tiefpassfilter, insbesondere einen zweistufigen zweiten Tiefpassfilter mit dem ersten Widerstand gekoppelt ist. Dadurch kann eine geschlossene Regelschleife bereitgestellt werden, wobei der zweite Tiefpassfilter der Ermittlung eines Strommittelwerts durch die Spannungsausgleichslängsimpedanz ausgelegt ist. Insbesondere ist der zweite Tiefpassfilter zur Ausfilterung der netzfrequenten Anteile aus dem Stromsignal, welches an dem ersten Widerstand bereitgestellt wird, ausgelegt.

In einer weiteren bevorzugten Ausführungsform weist die Regeleinheit ein analoges Verstärkerbauelement oder eine programmgesteuerte Recheneinheit zur Regelung der Spannungsausgleichslängsimpedanz auf. So kann beispielsweise im Fall eines analogen Verstärkerbauelements vorgesehen sein, ein PWM-Steuersignal oder ein Analog-Steuersignal über den ersten Tiefpass auf einen Eingang des analogen Verstärkerbauelements zu koppeln, vorzugsweise auf einen nicht-invertierenden Eingang des Verstärkerbauelements, und einen Ausgang des analogen Verstärkerbauelements auf den Steueranschluss der Spannungsteilereinrichtung zu koppeln. Besonders bevorzugt erfolgt hierbei die Kopplung des Ausgangs des analogen Verstärkerbauelements mit dem Steueranschluss über eine Diode.

Bei einer Implementierung der Regeleinheit durch eine programmgesteuerte Recheneinheit kann die Recheneinheit einen Pulsweitenmodulationsausgang aufweisen, welcher mit dem ersten Tiefpassfilter gekoppelt ist. Des Weiteren kann die Recheneinheit einen Analog-Digital-Wandlereingang aufweisen, welcher mit dem zweiten Tiefpassfilter elektrisch gekoppelt ist. Auf diese Weise wird eine digitale Regelung auf der Basis eines ausführbaren Programmcodes, welcher in der programmgesteuerten Recheneinheit hinterlegt ist, bereitgestellt. Besonders bevorzugt kann ein Sollwert für den durch die Spannungsausgleichslängsimpedanz einzustellenden Strom an einen weiteren Eingang der programmgesteuerten Recheneinheit bereitstellbar sein.

In einer weiteren bevorzugten Ausführungsform ist die Regeleinheit dazu ausgelegt, mittels Anpassung des Stromgrenzwert den Mittelwert des durch die Lastuntergruppen fließenden Stroms bei einer Erhöhung der Versorgungswechselspannung auf einen gleichbleibenden oder reduzierten Wert einzustellen und/oder bei einer Reduzierung der Versorgungswechselspannung auf einen gleichbleibenden oder erhöhten Wert einzustellen. Ausgehend von einem Nennbetriebszustand, bei welchem die Versorgungswechselspannung einen Nennspannungswert aufweist und die Schaltungsanordnung eine Nennleistung aufnimmt, auch als Normalbetrieb bezeichnet, führt somit eine Erhöhung der Versorgungswechselspannung nicht zu einer Erhöhung des Mittelwert des durch die Lastuntergruppen fließenden Stroms, und eine Reduzierung der Versorgungswechselspannung ausgehend von dem Nennwert der Versorgungsspannung führt nicht zu einem reduzierten Mittelwert des durch die Lastuntergruppen fließenden Stroms. Eine temporäre Änderung infolge eines verzögerten Eingreifens der Regeleinheit bleibt hierbei unberücksichtigt. Insbesondere kann bei Einsatz einer programmgesteuerten Recheneinheit auch vorgesehen sein, mittels der Recheneinheit eine elektrische Leistung, die den LED-Strängen zugeführt wird, in Abhängigkeit der gleichgerichteten Versorgungswechselspannung sowie des Stroms durch die Spannungsausgleichslängsimpedanz sowie eines Spannungsabfalls über der Spannungsausgleichslängsimpedanz zu ermitteln und diese auf einen konstanten Wert einzuregeln.

In einer weiteren bevorzugten Ausführungsform weist die Schaltungsanordnung weiterhin einen Dimmanschluss zur Helligkeitssteuerung auf, welcher dazu ausgelegt ist, in Abhängigkeit von einem mittels eines externen Steuergeräts an dem Dimmanschluss bereitstellbaren Dimmsignal einen Sollwert an die Regeleinheit bereitzustellen. Dadurch können vorteilhafterweise ohnehin schon erfindungsgemäß vorhandene Funktionsblöcke in ihrer Funktionalität dahingehend erweitert werden, dass ein Leuchtmittel mit einer erfindungsgemäßen Schaltungsanordnung mit einem Anschluss zum Dimmen ausgestattet werden kann. Auf diese Weise ist eine einfache und kostengünstige bedarfsabhängige Anpassung der Helligkeit des Leuchtmittels möglich. Insbesondere bei Verwendung einer programmgesteuerten Recheneinheit (Mikrocontroller) kann jedes aus dem Stand der Technik bekannte Steuersignal, welches zur Helligkeitssteuerung eines Leuchtmittels verwendet wird, eingesetzt werden. Je nach Art des verwendeten Leuchtmittels, bei welchem die erfindungsgemäße Schaltungsanordnung zum Einsatz kommt, kann hierbei ein anderes Steuerprinzip zum Einsatz kommen.

In einer weiteren bevorzugten Ausführungsform ist die Regeleinheit dazu ausgelegt, in Abhängigkeit von dem Sollwert den Stromwert sowohl in dem ersten Zustand als auch in dem zweiten Zustand auf einen Stromdimmwert zu begrenzen, wobei der Stromdimmwert höchstens den Wert des vorgebbaren Stromgrenzwerts annimmt. Besonders bevorzugt kann hierbei vorgesehen sein, den Mittelwert eines durch die Lastuntergruppen fließenden Stroms auf der Basis der aktuell anliegenden Versorgungswechselspannung als 100-Prozent-Wert festzulegen und entsprechend der von dem Dimmsignal geforderten Einstellung für eine reduzierte Helligkeit des Leuchtmittels mit der erfindungsgemäßen Schaltungsanordnung den Mittelwert des durch die Lastuntergruppen fließenden Stroms auf einen entsprechend reduzierten Wert einzuregeln. Dadurch wird in besonders vorteilhafter Weise sowohl die Anpassung des mittleren Stroms an eine veränderte Versorgungswechselspannung als auch eine Reduzierung der Helligkeit entsprechend einem von extern bereitstellbaren Dimmsignal ermöglicht.

In einer weiteren bevorzugten Ausführungsform ist die Regeleinheit dazu ausgelegt, bei einem fehlenden Dimmsignal an dem Dimmanschluss und/oder in dem Fall, dass kein externes Steuergerät an dem Dimmanschluss angeschlossen ist, als Stromwert in dem ersten Zustand den vorgebbaren Stromgrenzwert einzustellen. Hierdurch kann beim Ausfall eines externen Steuergeräts oder bei einer Unterbrechung der Steuerleitung, welche der Bereitstellung des Dimmsignals an dem Dimmanschluss dient, sichergestellt werden, dass der im Nennbetrieb vorgesehene Lichtstrom von dem Leuchtmittel mit einer erfindungsgemäßen Schaltungsanordnung bereitgestellt wird, wodurch die Sicherheit erhöht wird.

Bevorzugt umfassen die Lastuntergruppen jeweils eine unterschiedliche Anzahl an LEDs, wobei bevorzugt jede höher gelegene Lastuntergruppe die doppelte Anzahl an LEDs umfasst wie die nächst niedriger gelegene Lastuntergruppe. Auf diese Weise wird eine optimale Ausnutzung der Netzwechselspannung und damit ein besonders hoher Wirkungsgrad ermöglicht.

Weitere Vorteile und Merkmale sind den in der folgenden Beschreibung dargestellten Ausführungsbeispielen zu entnehmen. In den Figuren bezeichnen gleiche Bezugszeichen gleiche Merkmale und Funktionen.

### Kurze Beschreibung der Zeichnungen(en)

Es zeigen:
- Fig. 1: in vereinfachter schematischer Darstellung ein Ausführungsbeispiel einer erfindungsgemäßen Schaltungsanordnung,
- Fig. 2: in schematischer Darstellung eine konkretisierte Form einer Spannungsteilereinrichtung und einer Spannungsausgleichslängsimpedanz,
- Fig. 3: in schematischer Darstellung eine Alternative zu der Spannungsteilereinrichtung aus Fig. 2 mit der bereits bekannten Spannungsausgleichslängsimpedanz,
- Fig. 4: eine schematische Darstellung eines Diagramms mit einer Zusammenstellung von beispielhaften Kurven eines zeitlichen Verlaufs eines Stroms durch die Spannungsausgleichslängsimpedanz,
- Fig. 5a: eine schematische Darstellung eines Diagramms, in dem eine Kurve aus Fig. 4 in drei Teilstromkurven zerlegt ist, und
- Fig. 5b: eine schematische Darstellung eines Diagramms, in dem eine weitere Kurve aus Fig. 4 in drei Teilstromkurven zerlegt ist.

### Bevorzugte Ausführung der Erfindung

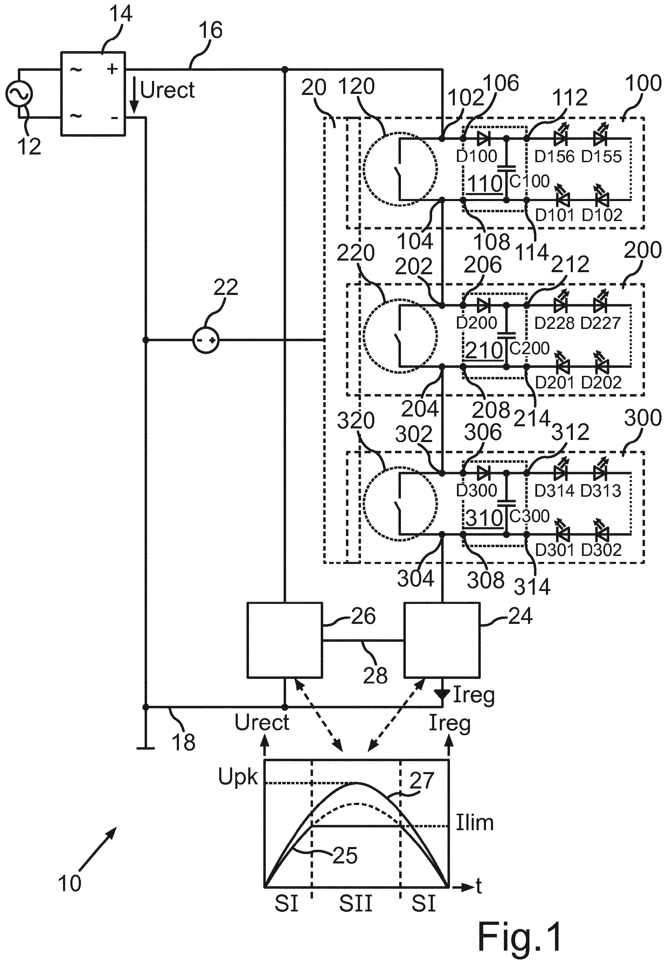

In der Fig. 1 ist eine Versorgungswechselspannung 12 dargestellt, welche mit einem Wechselspannungsanschluss eines Netzgleichrichters 14 gekoppelt ist. Der Netzgleichrichter 14 weist einen Plusanschluss, welcher mit einem ersten Eingangsanschluss 16 der Schaltungsanordnung 10 gekoppelt ist, sowie einen Minusanschluss, der mit einem zweiten Eingangsanschluss 18 der Schaltungsanordnung 10 gekoppelt ist, auf.

Zwischen dem ersten Eingangsanschluss 16 und dem zweiten Eingangsanschluss 18 liegt die gleichgerichtete Versorgungswechselspannung 12 mit einem Spannungswert Urect an. Die Schaltungsanordnung 10 weist ferner eine Steuereinrichtung 20 auf, welche mit drei Lastuntergruppen 100, 200, 300 gekoppelt ist. Die erste Lastuntergruppe 100 weist einen ersten Anschluss 102 und einen zweiten Anschluss 104 auf. Die zweite Lastuntergruppe 200 weist einen ersten Anschluss 202 und einen zweiten Anschluss 204 auf. Die dritte Lastuntergruppe 300 weist einen ersten Anschluss 302 und einen zweiten Anschluss 304 auf. Der erste Anschluss 102 ist elektrisch leitend mit dem ersten Eingangsanschluss 16 verbunden. Der zweite Anschluss 104 ist elektrisch leitend mit dem ersten Anschluss 202 verbunden. Der zweite Anschluss 204 ist elektrisch leitend mit dem ersten Anschluss 302 verbunden.

Die Schaltungsanordnung 10 weist weiterhin eine Hilfsgleichspannungsquelle 22 auf, welche an ihrem Minusanschluss mit den zweiten Eingangsanschluss 18 gekoppelt ist und an ihrem Plusanschluss mit der Steuereinrichtung 20 gekoppelt ist. Zwischen den zweiten Anschluss 304 und den zweiten Eingangsanschluss 18 ist eine Spannungsausgleichslängsimpedanz 24 gekoppelt, welche von einem Strom mit einem Stromwert Ireg durchflossen wird. Zwischen dem ersten Eingangsanschluss 16 und dem zweiten Eingangsanschluss 18 ist eine Spannungsteilereinrichtung 26 gekoppelt, welche ein Steuersignal 28 an die Spannungsausgleichslängsimpedanz 24 bereitstellt.

Die erste Lastuntergruppe 100 weist ein erstes Koppelelement 110 auf, welches als Vierpol ausgebildet ist. Das erste Koppelelement 110 weist einen ersten Primäranschluss 106 und einen zweiten Primäranschluss 108 sowie einen ersten Sekundäranschluss 112 und einen zweiten Sekundäranschluss 114 auf. Der erste Primäranschluss 106 ist elektrisch leitend mit dem ersten Anschluss 102 verbunden, und der zweite Primäranschluss 108 ist elektrisch leitend mit dem zweiten Anschluss 104 verbunden. Zwischen den ersten Anschluss 102 und somit auch den ersten Primäranschluss 106 und den zweiten Anschluss 104 und somit auch den zweiten Primäranschluss 108 ist ein erstes Überbrückungselement 120 geschaltet. Das Überbrückungselement 120 ist somit parallelgeschaltet zu den beiden Primäranschlüssen 106 und 108. Ein erster LED-Strang D101 bis D156, welcher 56 in Reihe geschaltete LEDs aufweist, ist zwischen den ersten Sekundäranschluss 112 und den zweiten Sekundäranschluss 114 geschaltet.

In der dargestellten Ausführungsform weist das Koppelelement 110 eine erste Diode D100 auf, welche zwischen den ersten Primäranschluss 106 und den ersten Sekundäranschluss 112 gekoppelt ist. Zwischen den ersten Sekundäranschluss 112 und den zweiten Sekundäranschluss 114 ist ein erster Kondensator C100 gekoppelt. Somit ist der erste Kondensator C100 parallelgeschaltet zu dem ersten LED-Strang mit den LEDs D101 bis D156.

In gleicher Weise wie die erste Lastuntergruppe 100 sind auch eine zweite Lastuntergruppe 200 und eine dritte Lastuntergruppe 300 aufgebaut. Die einander entsprechenden Elemente sind mit korrespondierenden Bezugszeichen gekennzeichnet, wobei jeweils die Hunderterstelle der Bezugszeichen auf die entsprechende Lastuntergruppe hinweist. So ist beispielsweise der erste Anschluss der zweiten Lastuntergruppe 200 mit 202 bezeichnet und der erste Sekundäranschluss eines dritten Koppelelements 310 der dritten Lastuntergruppe 300 ist mit 312 bezeichnet. Im Aufbau unterscheidet sich die zweite Lastuntergruppe 200 von der ersten Lastuntergruppe 100 dadurch, dass die Anzahl der LEDs in dem zweiten LED-Strang lediglich halb so groß ist, das heißt es sind 28 LEDs D201 bis D228 angeordnet zwischen den beiden Anschlüssen 212 und 214. In gleicher Weise ist die Anzahl der LEDs in der dritten Lastuntergruppe 300 wiederum auf die Hälfte reduziert. Hier sind 14 LEDs D301 bis D314 zwischen den ersten Sekundäranschluss 312 und den zweiten Sekundäranschluss 314 gekoppelt.

In dem dargestellten Ausführungsbeispiel ist der erste Eingangsanschluss 16 mit einem Plus-Anschluss des Netzgleichrichters 14 elektrisch gekoppelt, und der zweite Eingangsanschluss 18, welcher gleichzeitig das Bezugspotential der Schaltung bereitstellt, ist mit einem MinusAnschluss des Netzgleichrichters 14 gekoppelt. Diese Zuordnung kann selbstverständlich getauscht werden, wobei dann entsprechend die Richtung der Dioden D100 und D101 bis D156, D200 und D201 bis D228 sowie D300 und D301 bis D314 entsprechend anzupassen ist. Ebenso ist in diesem Fall auch die Polarität der Hilfsgleichspannungsquelle 22 zu ändern.

Zur Verdeutlichung des Zusammenwirkens der Spannungsausgleichslängsimpedanz 24 und der Spannungsteilereinrichtung 26 sind zwei Kurvenverläufe 25, 27 in einem Diagramm schematisch dargestellt. Über einer Zeit t ist hierbei ein Spannungswert Urect sowie ein Stromwert Ireg eines Stroms durch die Spannungsausgleichslängsimpedanz 24 dargestellt. Die Zeit t ist über die Dauer einer Netzhalbwelle dargestellt und in drei Bereiche unterteilt, wobei in zwei Randbereichen beziehungsweise äußeren Bereichen jeweils ein erster Zustand SI vorliegt und in einem mittleren Bereich ein zweiter Zustand SII vorliegt.

In dem ersten Zustand SI folgt ein Stromkurvenverlauf 25, welcher den Verlauf des Stromwerts Ireg angibt, einem sinusförmigen Verlauf. Ein Spannungskurvenverlauf 27 kennzeichnet den Verlauf des Spannungswerts Urect über der Zeit t. Der Spannungskurvenverlauf 27 weist im dargestellten Bereich den Verlauf einer Sinushalbwelle auf. In dem ersten Zustand SI ist der Stromkurvenverlauf 25 proportional zu dem Spannungskurvenverlauf 27. In dem zweiten Zustand SII weist der Stromkurvenverlauf 25 einen konstanten Wert auf, nämlich einen vorgebbaren Stromgrenzwert Ilim. Hierdurch ergibt sich über den gesamten Bereich ein Verlauf des Stromwerts Ireg entsprechend einem abgeplatteten beziehungsweise gekappten Sinus. Zum Vergleich ist der proportionale Zusammenhang wie in dem ersten Zustand SI gestrichelt dargestellt. Der Spannungswert Urect der gleichgerichteten Versorgungswechselspannung 12, dargestellt durch den Spannungskurvenverlauf 27, weist ein Maximum bei einem Scheitelwert Upk auf.

Bei dem dargestellten Ausführungsbeispiel stellt die erste Lastuntergruppe 100 die höchstgelegene Lastuntergruppe dar, welche elektrisch am weitesten entfernt von einem durch den zweiten Eingangsanschluss 18 bereitgestellten Bezugspotential entfernt angeordnet ist. Die dritte Lastuntergruppe 300 stellt entsprechend die tiefstgelegene Lastuntergruppe dar, welche elektrisch am nächsten zu dem von dem zweiten Eingangsanschluss 18 bereitgestellten Bezugspotential angeordnet ist. Lediglich die Spannungsausgleichslängsimpedanz 24 ist zwischen den zweiten Anschluss 302 der dritten Lastuntergruppe 300, welche hier die tiefstgelegene Lastuntergruppe ist, und den zweiten Eingangsanschluss 18 geschaltet. Die zweite Lastuntergruppe 200 stellt somit eine mittlere Lastuntergruppe dar. Die Darstellung von drei Lastuntergruppen ist lediglich beispielhaft zur Erläuterung der Erfindung gewählt, hierbei kann jede Anzahl größer als Eins vorgesehen sein. Bei einer Festlegung auf zwei Lastuntergruppen ist folglich die erste Lastuntergruppe die höchstgelegene Lastuntergruppe, und die zweite Lastuntergruppe 200 als nächst tiefer gelegene Lastuntergruppe ist hier bereits die tiefstgelegene Lastuntergruppe, deren zweiter Anschluss 204 in diesem Fall mit der Spannungsausgleichslängsimpedanz 24 gekoppelt wäre.

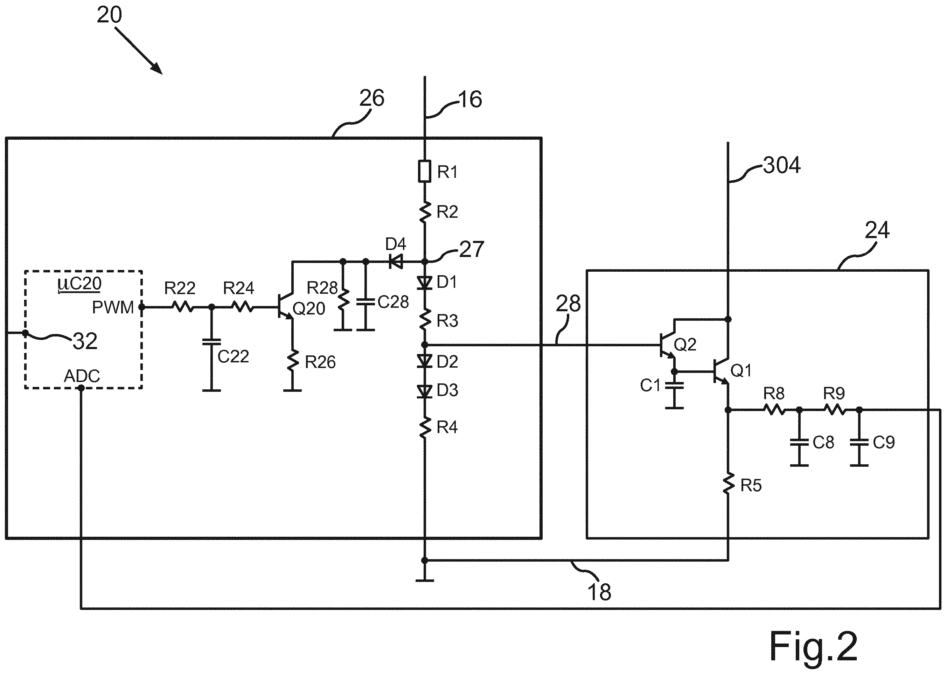

Fig. 2 zeigt eine konkretisierte erste Ausführungsform 20 eines Teils der Schaltungsanordnung 10, nämlich der Spannungsausgleichslängsimpedanz 24 sowie der Spannungsteilereinrichtung 26. Zwischen den ersten Eingangsanschluss 16 und den zweiten Eingangsanschluss 18 ist eine Spannungsteilerkette R1, R2, D1, R3, D2, D3, R4 geschaltet, welche beginnend bei dem Anschluss der Spannungsteilereinrichtung 26, welcher dem ersten Eingangsanschluss 16 zugeordnet ist, die folgenden Bauelemente unmittelbar hintereinandergeschaltet in der Reihenfolge der nachfolgenden Aufzählung aufweist. Die Spannungsteilerkette umfasst einen ersten Widerstand R1, einen zweiten Widerstand R2, eine erste Diode D1, einen dritten Widerstand R3, eine zweite Diode D2, eine dritte Diode D3, sowie einen vierten Widerstand R4, welcher mit dem zweiten Eingangsanschluss 18 gekoppelt ist. Zwischen dem zweiten Widerstand R2 und der ersten Diode D1 ist ein Steueranschluss 27 angeordnet. Entsprechend der gewählten Polarität des ersten Eingangsanschlusses 16 und des zweiten Eingangsanschlusses 18 sind die erste Diode D1, die zweite Diode D2 und die dritte Diode D3 in Flussrichtung geschaltet, das heißt ihre Anoden weisen jeweils in Richtung zu dem ersten Eingangsanschluss 16, und ihre Kathoden weisen jeweils in Richtung zu dem zweiten Eingangsanschluss 18.

Die Anode einer vierten Diode D4 ist elektrisch leitend mit dem Steueranschluss 27 verbunden. Die Kathode der zweiten Diode D2 ist mit dem Kollektor eines NPN-Transistors Q20 verbunden. Zwischen den Kollektor des NPN-Transistors Q20 sowie die Kathode der vierten Diode D4 und zwischen das Bezugspotential ist eine Parallelschaltung aus einem Widerstand R28 und einem Kondensator C28 gekoppelt. Zwischen den Emitter des NPN-Transistors Q20 und das Bezugspotential ist ein Widerstand R26 gekoppelt. Ein erster Tiefpassfilter, gebildet aus einem Widerstand R22 und einem Kondensator C22, ist ausgangsseitig über einen Widerstand R24 auf die Basis des NPN-Transistors Q20 gekoppelt.

Die Spannungsteilereinrichtung 26 weist ferner eine Regeleinheit in Form eines Mikrocontrollers pC20 auf, welcher einen Pulsweitenmodulationsausgang PWM, einen Analog-/Digital-Wandlereingang ADC sowie einen Dimmanschluss 32 aufweist. Der Pulsweitenmodulationsausgang PWM ist mit dem ersten Tiefpassfilter, also dem Widerstand R22, elektrisch gekoppelt.

Die Spannungsausgleichslängsimpedanz 24 weist eine Serienschaltung eines ersten Transistors Q1 und eines fünften Widerstands R5 auf, welcher zwischen den zweiten Anschluss 304 und den zweiten Eingangsanschluss 18 gekoppelt ist. Der Emitter des ersten Transistors Q1 ist hierbei mit dem als Strommesswiderstand (Shunt) verwendeten fünften Widerstand R5 gekoppelt. Der Kollektor des ersten Transistors Q1 ist mit dem zweiten Anschluss 304 elektrisch leitend verbunden. Ein zweiter Transistor Q2 ist parallel zu der Basis-Kollektorstrecke des ersten Transistors Q1 geschaltet, das heißt der Kollektor des ersten Transistors Q1 ist mit dem Kollektor des zweiten Transistors Q2 elektrisch leitend verbunden, und die Basis des ersten Transistors Q1 ist mit dem Emitter des zweiten Transistors Q2 elektrisch leitend verbunden. Zwischen die Basis des ersten Transistors Q1 und das Bezugspotential ist außerdem ein Kondensator C1 gekoppelt.

Zwischen dem dritten Widerstand R3 und der zweiten Diode D2 der Spannungsteilerkette der Spannungsteilereinrichtung 26 wird ein Steuersignal 28 abgegriffen, welches über eine elektrisch leitende Verbindung zu der Basis des zweiten Transistors Q2 der Spannungsausgleichslängsimpedanz 24 zugeführt wird. Eine Shunt-Spannung über dem fünften Widerstand R5 wird über einen zweiten Tiefpassfilter, welcher als zweistufiger Tiefpassfilter durch einen Widerstand R8, einen Kondensator C8, einen Widerstand R9 sowie einen Kondensator C9 ausgebildet ist, auf den Analog-/Digital-Wandlereingang ADC des Mikrocontrollers pC20 gekoppelt. Mittels des Mikrocontrollers pC20 ist somit ein geschlossener Regelkreis implementiert, der als Istwerteingang den Analog-/Digital-Wandlereingang ADC, als Reglerausgang den Pulsweitenmodulationsausgang PWM und als Sollwerteingang den Dimmanschluss 32 aufweist.

Der Strom mit dem Stromwert Ireg, der durch die Lastuntergruppen 100, 200 300 fließt, wird mittels eines durch den ersten Transistor Q1, den zweiten Transistor Q2 und den fünften Widerstand R5 gebildeten Linearregler und dessen Ansteuerung über die Spannungsteilerkette R1, R2, D1, R3, D2, D3, R4 eingestellt. Ziel ist es, den Stromwert Ireg (und dadurch die Helligkeit der LEDs in den einzelnen LED-Strängen) zu reduzieren. Ein PWM-Signal an dem Pulsweitenmodulationsausgang PWM des Mikrocontrollers pC20 wird mit dem Tiefpass R22, C22 geglättet. Eine daraus resultierende Spannung beziehungsweise ein daraus resultierender Strom durch den Widerstand R24 steuert den Transistor Q20 so an, dass am Kondensator C28 eine konstante Spannung anliegt. Ein Spannungswert an der ersten Diode D1, also an dem Steueranschluss 27, und somit der Sollwert wird auf eine entsprechende Spannung begrenzt.

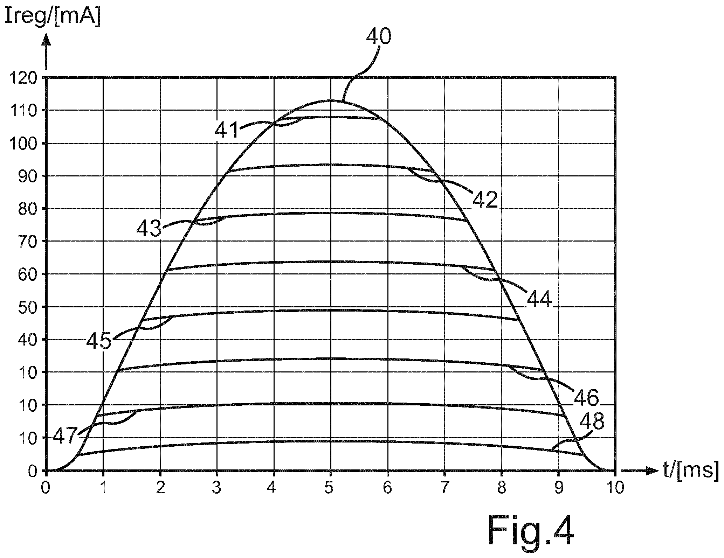

Im Falle eines Netzbetriebes bei sinusförmigem Spannungsverlauf am Eingang des Netzgleichrichters 14 wird der Sinusbogen in Abhängigkeit des PWM-Tastverhältnisses begrenzt (vergleiche Fig. 4).

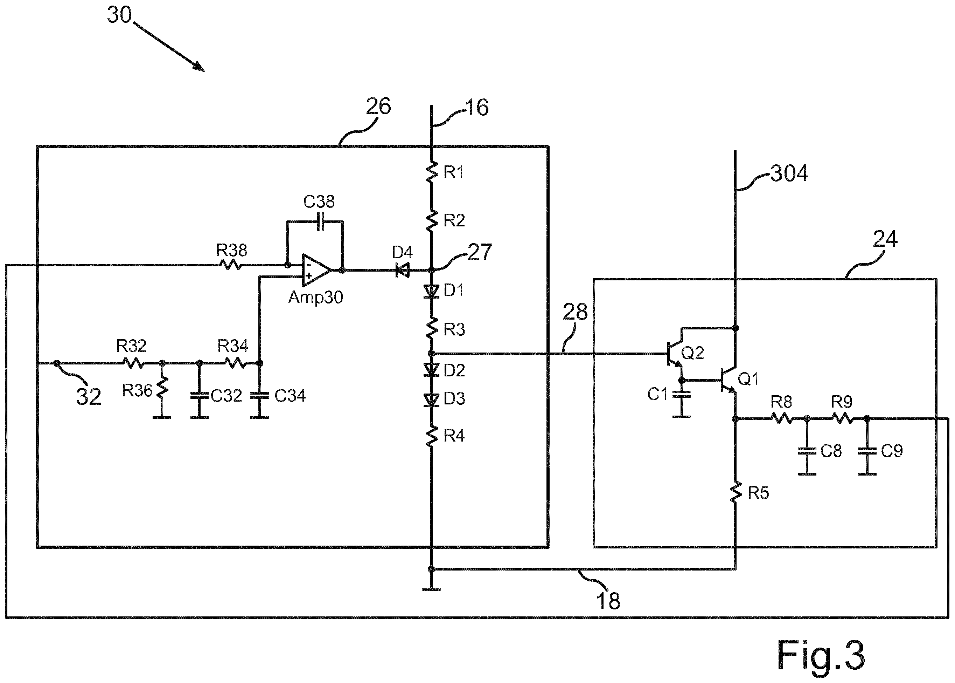

Fig. 3 zeigt eine zweite Ausführungsform 30 des in der Fig. 2 dargestellten Teils der Schaltungsanordnung 10, bei welcher die Spannungsausgleichslängsimpedanz 24 identisch zu derjenigen der ersten Ausführungsform 20 ausgeführt ist. Ebenso ist die Spannungsteilerkette der Spannungsteilereinrichtung 26 zwischen dem ersten Eingangsanschluss 16 und dem zweiten Eingangsanschluss 18 identisch aufgebaut. Zwischen dem Dimmanschluss 32 und dem Bezugspotential ist die Serienschaltung von einem Widerstand R32 und einem Widerstand R36 angeordnet. Parallel zu dem Widerstand R36 ist hierbei ein Kondensator C32 angeordnet. Der Verbindungspunkt zwischen dem Widerstand R32 und dem Widerstand R36 ist weiterhin über einen Widerstand R34 mit einem nichtinvertierenden Eingangsanschluss eines Verstärkerelements AMP30 elektrisch gekoppelt. Zwischen den nichtinvertierenden Eingang des Verstärkerbauelements AMP30 und den Bezugspotential ist außerdem ein Kondensator C34 gekoppelt. Der Ausgang des Verstärkerbauelements AMP30 ist über die vierte Diode D4 elektrisch mit dem Steueranschluss 27 gekoppelt. Dabei ist - wie in der ersten Ausführungsform 20 - die Anode der ersten Diode D1 mit der Anode der vierten Diode D4 elektrisch leitend verbunden. Der Ausgang des Verstärkerbauelements AMP30 ist des Weiteren über einen Kondensator C38 mit einem invertierenden Eingang des Verstärkerbauelements AMP30 elektrisch gekoppelt. Weiterhin ist der bereits bekannte zweistufige Tiefpassfilter R8, C8, R9, C9 der Spannungsausgleichslängsimpedanz 24 über einen Widerstand R38 mit dem invertierenden Eingang des Verstärkerbauelements AMP30 gekoppelt. Bei dem Verstärkerbauelement AMP30 kann es sich beispielsweise um einen Operationsverstärker oder um einen Komparator handeln.

Der Dimmanschluss 32 kann beispielsweise dafür verwendet werden, ein Analogsignal oder auch ein PWM-Signal für die Vorgabe eines variablen Sollwertes zu nutzen. Gemäß der Erfindung kann hierbei auch rein intern ein konstanter Wert vorgegeben werden, um beispielsweise unabhängig von Schwankungen der Versorgungswechselspannung 12 eine gleichbleibende Lichtabgabe der einzelnen LEDs der drei LED-Stränge D101 bis D156, D201 bis D228 und D301 bis D314 zu erzielen. Insbesondere kann damit erreicht werden, dass sich bei einer Erhöhung der Versorgungswechselspannung der Mittelwert eines durch die Lastuntergruppen 100, 200 und 300 fließenden Stroms nicht erhöht beziehungsweise bei einer Reduktion der Versorgungswechselspannung nicht reduziert.

Im Falle einer Vertauschung der Polaritäten der zwischen dem ersten Eingangsanschluss 16 und dem zweiten Eingangsanschluss 18 anliegenden gleichgerichteten Versorgungswechselspannung 12 sind entsprechend die in der Spannungsausgleichslängsimpedanz 24 und der Spannungsteilereinrichtung 26 angeordneten Dioden in ihrer Richtung entsprechend zu drehen und NPN-Transistoren durch entsprechende PNP-Transistoren zu ersetzen. Gegebenenfalls können auch weiterhin NPN-Transistoren zum Einsatz kommen, wobei dann allerdings Anpassungen an der Schaltungstopologie notwendig werden. Ebenso können natürlich statt Bipolartransistoren auch Feldeffekttransistoren, insbesondere MOSFET zum Einsatz kommen.

In der zweiten Ausführungsform 30 ist die Begrenzung des Sollwertes durch das Verstärkerbauelement AMP30 in Form eines Operationsverstärkers, der als Stromsenke arbeitet, realisiert. Die Sollwertvorgabe kann eine externe PWM-Quelle oder eine analoge Spannungsquelle sein, welche an den Dimmanschluss 32 anschließbar ist. Somit ist neben einer Regulierung des Helligkeitswertes mittels PWM- oder Analogsignal auch eine Einhaltung der anzuwendenden Norm bezüglich harmonischer Oberschwingungen mit ausreichender Sicherheitsmarge auch im gedimmten Zustand gegeben.

Wird ein 100-Prozent-Lichtwert bereits bei einer begrenzten Sinuswelle erreicht, besteht die Möglichkeit, bei Netzspannungsschwankungen nicht nur bei steigender Netzspannung den Mittelwert des durch die Lastuntergruppen 100, 200, 300 fließenden Stroms konstant zu halten oder zu verringern, sondern auch die Möglichkeit, bei sinkender Netzspannung den Mittelwert des durch die Lastuntergruppen 100, 200, 300 fließenden Stroms zu erhöhen, um eine konstante Lichtausbeute zu erreichen.

Fig. 4 zeigt einen beispielhaften Verlauf des Stromwerts Ireg über den Verlauf einer Netzhalbwelle im Bereich von 0 bis 10 Millisekunden (ms). Auf der Abszisse ist die Zeit t in Millisekunden dargestellt, auf der Ordinate der Stromwert Ireg in Milliampere (mA) im Bereich von 0 bis 120. Die erste Kurve 40 stellt hierbei den Verlauf dar, welcher sich ergibt, wenn an dem Steueranschluss 27 kein Strom abgezogen wird, das heißt wenn kein aktiver Eingriff an der Spannungsteilerkette der Spannungsteilereinrichtung 26 erfolgt. Die Kurve 40 entspricht somit einem Verlauf, welcher aus dem Stand der Technik bekannt ist. Beispielhaft sind nun weitere Kurven 41 bis 48 mit zunehmend stärkerer Begrenzung dargestellt. Die Kurve 41 stellt beispielsweise den Fall einer geringen Abplattung dar, welche es ermöglicht, bei sinkender Versorgungswechselspannung den Stromwert zu erhöhen und damit einen Helligkeitsverlust zu kompensieren. Die Kurve 42 ist deutlich stärker abgeplattet und kann beispielsweise zur Erzielung einer gleichmäßigeren Verteilung des mittleren Stroms, der durch die jeweiligen Lastuntergruppen 100, 200, 300 fließt, realisiert werden. Die Kurve 42 ergibt sich ungefähr bei einer Begrenzung, die dann wirksam ist, wenn das erste Überbrückungselement 120 und das zweite Überbrückungselement 220 beide sperrend geschaltet sind. Die Kurve 44 korrespondiert mit einer Begrenzung, die dann wirksam ist, wenn das erste Überbrückungselement 120 sperrend geschaltet ist. Dadurch ergibt sich ein breiterer mittlerer Bereich, in welchem die Begrenzung aktiv ist. Eine Reduktion des mittleren Stroms durch die Lastuntergruppen 100, 200, 300 kann daneben auch komfortabel zum Dimmen der LED-Stränge D101 bis D156, D201 bis D228 und D301 bis D314 benutzt werden. So kann beispielsweise vorgesehen sein, dass die Kurve 42 einer 100-Prozent-Dimmstellung entspricht und die weiteren Kurven 43, 44, 45, 46, 47 und 48 jeweils immer weiter abnehmende Helligkeitsstufen der LED-Stränge D101 bis D156, D201 bis D228 und D301 bis D314 repräsentieren.

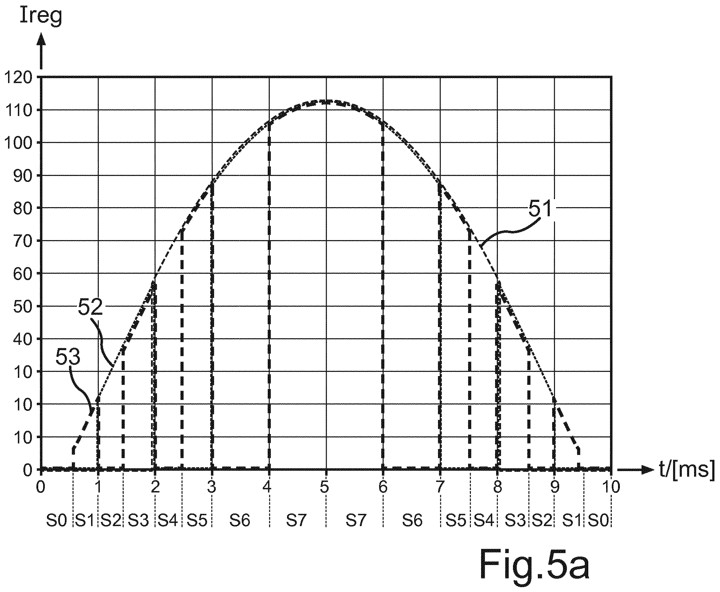

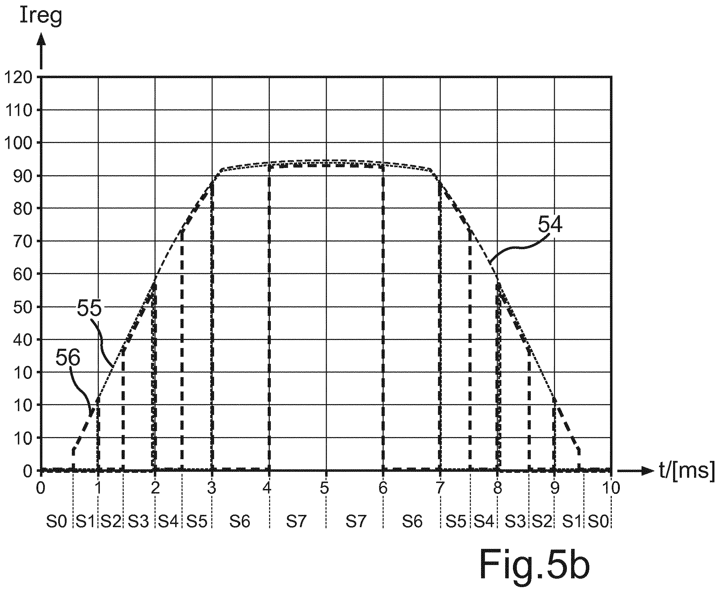

Fig. 5a und Fig. 5b zeigen zwei Diagramme, in denen jeweils die Kurve 40 und 42 aus der Fig. 4 in Abhängigkeit von Schaltzuständen der Überbrückungselemente 120, 220 und 320 in jeweils durch die Koppelelemente 110, 210, 310 fließende Ströme zerlegt sind. Die Achsenbeschriftungen sind identisch zu denjenigen der Fig. 4, zusätzlich sind Zustände S0 bis S7 an der Zeitachse ergänzt, aus denen der jeweilige Schaltzustand der Überbrückungselemente 120, 220, 320 ermittelt werden kann. Eine vollständige Übersicht ist nachfolgender Tabelle zu entnehmen. In der ersten Spalte sind hierbei die jeweiligen Schaltzustände aufgelistet und in der ersten Zeile die drei Überbrückungselemente 120, 220, 320.

| | 120 | 220 | 320 |
|---|---|---|---|
| S0 | kurzgeschlossen | kurzgeschlossen | kurzgeschlossen |
| S1 | kurzgeschlossen | kurzgeschlossen | gesperrt |
| S2 | kurzgeschlossen | gesperrt | kurzgeschlossen |
| S3 | kurzgeschlossen | gesperrt | gesperrt |
| S4 | gesperrt | kurzgeschlossen | kurzgeschlossen |
| S5 | gesperrt | kurzgeschlossen | gesperrt |
| S6 | gesperrt | gesperrt | kurzgeschlossen |
| S7 | gesperrt | gesperrt | gesperrt |

Für die Kurve 40 ist eine erste Teilstromkurve 51, eine zweite Teilstromkurve 52 und eine dritte Teilstromkurve 53 dargestellt. Ebenso ist für die Kurve 42 eine vierte Teilstromkurve 54, eine fünfte Teilstromkurve 55 sowie eine sechste Teilstromkurve 56 dargestellt. Die erste Teilstromkurve 51 und die vierte Teilstromkurve 54 verlaufen identisch zu den Kurven 40 beziehungsweise 42 in den Zuständen S4 bis S7 und sind identisch Null in den Zuständen S0 bis S3. Die zweite Teilstromkurve 52 und die fünfte Teilstromkurve 55 verlaufen identisch zu den jeweiligen Kurven 40 beziehungsweise 42 in den Zuständen S2 und S3 sowie S6 und S7 und sind identisch Null in den Zuständen S0 und S1 sowie S4 und S5. Die dritte Teilstromkurve 53 und die sechste Teilstromkurve 56 verlaufen identisch zu den jeweiligen Kurven 40 beziehungsweise 42 in den Zuständen S1, S3, S5 und S7, in den Zuständen S0, S2, S4 und S6 sind sie identisch Null.

Da die Schaltzeitpunkte, welche die Übergänge zwischen den einzelnen Zuständen bewirken, von den Flussspannungen der in Reihe geschalteten LEDs der einzelnen LED-Stränge D101 bis D156, D201 bis D228, D301 bis D314 abhängen, können durch eine Variation der Anzahl der LEDs in den einzelnen LED-Strängen die Schaltzeitpunkte verschoben werden. Beispielsweise kann der vorgebbare Stromgrenzwert Ilim in Abhängigkeit von einem gewünschten beziehungsweise geduldeten Oberwellengehalt des Netzstromes festgelegt werden und in Abhängigkeit davon die entsprechenden Schaltzeitpunkte so konfiguriert werden, dass insbesondere die LED-Stränge D101 bis D156, D201 bis D228, D301 bis D314 mit den höchsten mittleren Strombelastungen, also die LEDs D101 bis D156 der höchstgelegenen Lastuntergruppe 100 sowie die LEDs D201 bis D228 der nächst tiefer gelegenen Lastuntergruppe 200 näherungsweise den gleichen mittleren Strom aufweisen.

Der mittlere Strom kann hierbei beispielsweise aus einer Messwertetabelle, welche die Daten für die Teilstromkurven 54, 55 und gegebenenfalls auch 56 bereitstellt, ermittelt werden. Alternativ ist es auch möglich, den entsprechenden Kurvenverlauf durch eine Simulation oder durch eine angenäherte Berechnung mittels einer Tabellenkalkulation zu ermitteln. Die Ermittlung des mittleren Stromes ergibt sich dabei vorteilhaft aus einer numerischen Auswertung.

Die Begrenzung des Stromwerts Ireg auf einen Stromgrenzwert Ilim gemäß einer der Kurven 41 bis 48 kann vorteilhaft mit einem Dimmverfahren zur Helligkeitssteuerung eines Leuchtmittels, welches mit der erfindungsgemäßen Schaltungsanordnung 10 ausgestattet ist, herangezogen werden. Ein derartiges Leuchtmittel kann über einen entsprechenden Anschluss verfügen, über den ein Dimmsignal eingespeist werden kann. Dabei kann ein analoges Dimmsignal (1 bis 10 Volt), ein PWM-Signal oder auch ein digitales Signal wie beispielsweise DALI zum Einsatz kommen. Drahtlose Übertragungsverfahren (ZigBee, Bluetooth, WLAN) können ebenso eingesetzt werden wie Übertragung mittels Powerline-Verfahren, bei denen eine Dimminformation direkt über die beiden Stromversorgungsanschlüsse vor dem Eingang des Netzgleichrichters 14 eingespeist wird. Für die Schaltungstopologie der Schaltungsanordnung 10 bietet sich insbesondere auch ein Signalübertragungsverfahren an, bei welchem die Steuerinformation in der am Eingang des Netzgleichrichters 14 anliegenden Wechselspannung im Bereich des Nulldurchgangs enthalten ist. Auf diese Weise wird eine Wechselwirkung mit dem Lastkreis vorteilhaft vermieden, denn gerade im Bereich niedriger Werte der Versorgungswechselspannung 12 sind alle drei Lastuntergruppen 100, 200, 300 über die jeweiligen Überbrückungselemente 120, 220, 320 überbrückt und somit kurzgeschlossen.

Weiterhin kann beispielsweise auch ein Stufendimmverfahren eingesetzt werden, welches beispielsweise bei einer kurzen Unterbrechung der Versorgungsspannung auf eine nächst niedrigere Dimmstufe umschaltet. Ebenso kann ein "TouchDim"-Konzept vorgesehen sein, bei welchem ein binäres Eingangssignal ausgewertet wird und bei einem als Kurzdruck identifizierten Signalverlauf ein eingeschaltetes Leuchtmittel ausgeschaltet oder ein ausgeschaltetes Leuchtmittel eingeschaltet und bei einem als Langdruck identifizierten Signalverlauf die Helligkeit des Leuchtmittels kontinuierlich während der Dauer des Langdrucks erhöht oder reduziert wird, wobei die Dimmrichtung nach jedem Langdruck umgekehrt wird.

## Patentansprüche

1. Schaltungsanordnung (10) zum Betreiben mindestens eines ersten und eines zweiten LED-Strangs umfassend:
- einen Eingang mit einem ersten (16) und einem zweiten Eingangsanschluss (18) zum Koppeln mit einer gleichgerichteten Versorgungswechselspannung (12);
- eine Spannungsausgleichslängsimpedanz (24);
- eine Spannungsteilereinrichtung (26), welche zwischen den ersten (16) und den zweiten Eingangsanschluss (18) geschaltet ist, zur Bereitstellung eines Steuersignals (28) an die Spannungsausgleichslängsimpedanz (24);
- zumindest eine erste (100) und eine zweite Lastuntergruppe (200) mit jeweils einem ersten (102,202) und einem zweiten Anschluss (104,204) sowie einem Überbrückungselement (120, 220), wobei das Überbrückungselement (120, 220)jeweils zwischen den ersten und den zweiten Anschluss geschaltet ist, und die erste (100) und die zweite Lastuntergruppe (200) jeweils ein als Vierpol mit einem ersten (106,206) und einem zweiten Primäranschluss (108, 208), sowie mit einem ersten (112,212) und einem zweiten Sekundäranschluss (114,214) ausgebildetes Koppelelement (110,210) aufweist, wobei der erste Primäranschluss (106,206) mit dem jeweiligen ersten Anschluss (102,202) sowie der zweite Primäranschluss (108,208)mit dem jeweiligen zweiten Anschluss (104,204) elektrisch leitend verbunden ist, wobei der erste LED-Strang (D101 bis D156), welcher eine erste Anzahl von in Reihe geschalteten LEDs aufweist, zwischen die Sekundäranschlüsse (112,114) des Koppelelements (110) der ersten Lastuntergruppe (100) schaltbar ist, und der zweite LED-Strang (D201 bis D228), welcher eine zweite Anzahl von in Reihe geschalteten LEDs aufweist, zwischen die Sekundäranschlüsse (212,214) des Koppelelements (210) der zweiten Lastuntergruppe (200) schaltbar ist;
- eine Steuereinrichtung (20), welche dazu ausgelegt ist, das jeweilige Überbrückungselement (120,220) in Abhängigkeit von einer Spannungsdifferenz zwischen dem jeweils zugehörigen ersten Anschluss (102,202) und einer auf den zweiten Eingangsanschluss (18) bezogenen Hilfsgleichspannungsquelle (22) der Schaltungsanordnung (10) sowie in Abhängigkeit von einer jeweiligen LED-Strang-Spannung zu steuern, welche zwischen dem jeweiligen ersten (102,202) und dem jeweiligen zweiten Anschluss (104,204) anliegt, wenn das jeweils zugehörige Überbrückungselement (120,220) einen Kurzschluss-Stromfluss zwischen den jeweiligen ersten und zweiten Anschluss (102,104, 202,204) sperrt;
- wobei jeweils der zweite Anschluss einer höher gelegenen Lastuntergruppe, welche nicht eine tiefstgelegene Lastuntergruppe ist, mit dem ersten Anschluss einer jeweils nächst tiefer gelegenen Lastuntergruppe elektrisch leitend verbunden ist, wobei der erste Anschluss einer höchstgelegenen Lastuntergruppe mit dem ersten Eingangsanschluss (16) elektrisch gekoppelt ist und zwischen den zweiten Anschluss einer tiefstgelegenen Lastuntergruppe und den zweiten Eingangsanschluss (18) die Spannungsausgleichslängsimpedanz (24) geschaltet ist,
**dadurch gekennzeichnet,**
**dass** die Spannungsteilereinrichtung (26) dazu ausgelegt ist, mittels des Steuersignals (28) die Spannungsausgleichslängsimpedanz (24) derart anzusteuern, dass mittels der Spannungsausgleichslängsimpedanz (24) einen Strom mit einem Stromwert (Ireg) durch die seriell gekoppelten Lastuntergruppen (100,200) in einem ersten Zustand (SI) proportional zu einem Spannungswert (Urect) der gleichgerichteten Versorgungswechselspannung (12) und in einem zweiten Zustand (SII) gleich einem vorgebbaren Stromgrenzwert (Ilim) einstellbar ist, wobei die beiden Zustände innerhalb einer Netzhalbwelle seriell aufeinanderfolgen, und die Spannungsteilereinrichtung (26) einen Steueranschluss (27) zur Beeinflussung, insbesondere Begrenzung, des Steuersignals (28) aufweist, wobei die Spannungsteilereinrichtung (26) einen ersten Tiefpassfilter (R22, C22,R32, C32) aufweist, welcher ausgangsseitig mit dem Steueranschluss (27) gekoppelt ist und über den ein Analogsteuersignal oder ein PWM-Steuersignal auf den Steueranschluss (27) koppelbar ist.

2. Schaltungsanordnung (10) nach Anspruch 1,
**dadurch gekennzeichnet,**
**dass** jedes Koppelelement (110,210) eine Diode (D100,D200), welche zwischen den ersten Primäranschluss (106,206) und den ersten Sekundäranschluss (112,212) oder zwischen den zweiten Primäranschluss (108,208) und den zweiten Sekundäranschluss (114,214) geschaltet ist, und einen Kondensator (C100,C200), welcher zwischen den ersten Sekundäranschluss (112,212) und den zweiten Sekundäranschluss (114,214) geschaltet ist, umfasst.

3. Schaltungsanordnung (10) nach einem der vorhergehenden Ansprüche,
**dadurch gekennzeichnet,**
**dass** die Spannungsteilereinrichtung (26) dazu ausgelegt ist, im Zusammenwirken mit der Steuereinrichtung (20) den zweiten Zustand (SII) jedenfalls dann einzustellen, wenn das Überbrückungselement der höchstgelegenen Lastuntergruppe (100) sperrend geschaltet ist oder wenn beide Überbrückungselemente der höchstgelegenen (100) und der dazu nächst tiefer gelegenen Lastuntergruppe (200) sperrend geschaltet sind.

4. Schaltungsanordnung (10) nach einem der vorhergehenden Ansprüche,
**dadurch gekennzeichnet,**
**dass** die Spannungsteilereinrichtung (26) dazu ausgelegt ist, den zweiten Zustand (SII) dann einzustellen, wenn der Spannungswert (Urect) der gleichgerichteten Versorgungswechselspannung (12) einen vorgebbaren Spannungsgrenzwert (Ulim) übersteigt.

5. Schaltungsanordnung (10) nach einem der vorhergehenden Ansprüche,
**dadurch gekennzeichnet,**
**dass** der vorgebbare Spannungsgrenzwert (Ulim) in einem Nennbetriebszustand der Schaltungsanordnung (10) kleiner als ein Scheitelwert der Versorgungswechselspannung (Upk) ist.

6. Schaltungsanordnung (10) nach einem der vorhergehenden Ansprüche,
**dadurch gekennzeichnet,**
**dass** die Spannungsausgleichslängsimpedanz (24) einen ersten Widerstand (R5) aufweist, welcher elektrisch leitend mit dem zweiten Eingangsanschluss (18) verbunden ist, und von dem Strom durch die Lastuntergruppen (100,200) durchflossen ist.

7. Schaltungsanordnung (10) nach einem der vorhergehenden Ansprüche,
**dadurch gekennzeichnet,**
**dass** durch die Spannungsausgleichslängsimpedanz (24)in Verbindung mit der Spannungsteilereinrichtung (26) ein Stromspiegel (R5, Q1, Q2, R4, D2, D3) ausgebildet ist.

8. Schaltungsanordnung (10) nach Anspruch 6,
**dadurch gekennzeichnet**,
dassdie Spannungsteilereinrichtung eine Regeleinheit (µC20, Amp30) aufweist, die mit dem Steueranschluss (27) elektrisch gekoppelt ist, wobei ein Istwerteingang der Regeleinheit über einen zweiten Tiefpassfilter (R8, C8), insbesondere einen zweistufigen zweiten Tiefpassfilter (R8, C8, R9, C9) mit dem ersten Widerstand (R5) gekoppelt ist.

9. Schaltungsanordnung (10) nach Anspruch 8,
**dadurch gekennzeichnet,**
**dass** die Regeleinheit (µC20, Amp30) ein analoges Verstärkerbauelement (Amp30) oder eine programmgesteuerte Recheneinheit (µC20) zur Regelung der Spannungsausgleichslängsimpedanz (24) aufweist.

10. Schaltungsanordnung (10) nach Anspruch 8 oder 9, **dadurch gekennzeichnet,**
**dass** die Regeleinheit (µC20, Amp30) dazu ausgelegt ist, mittels Anpassung des Stromgrenzwert (Ilim) den Mittelwert des durch die Lastuntergruppen (100,200) fließenden Stroms bei einer Erhöhung der Versorgungswechselspannung (12) auf einen gleichbleibenden oder reduzierten Wert einzustellen und/oder bei einer Reduzierung der Versorgungswechselspannung (12) auf einen gleichbleibenden oder erhöhten Wert einzustellen.

11. Schaltungsanordnung (10) nach einem der Ansprüche 8 bis 10,
**dadurch gekennzeichnet,**
**dass** die Schaltungsanordnung (10) weiterhin einen Dimmanschluss (32) zur Helligkeitssteuerung aufweist, welcher dazu ausgelegt ist, in Abhängigkeit von einem mittels eines externen Steuergeräts an dem Dimmanschluss (32) bereitstellbaren Dimmsignal einen Sollwert an die Regeleinheit (µC20, Amp30) bereitzustellen.

12. Schaltungsanordnung (10) nach Anspruch 11,
**dadurch gekennzeichnet,**
**dass** die Regeleinheit (µC20, Amp30) dazu ausgelegt ist, in Abhängigkeit von dem Sollwert den Stromwert (Ireg) sowohl in dem ersten Zustand als auch in dem zweiten Zustand (SII) auf einen Stromdimmwert (Idim) zu begrenzen, wobei der Stromdimmwert (Idim) höchstens den Wert des vorgebbaren Stromgrenzwerts (Ilim) annimmt.

13. Schaltungsanordnung (10) nach Anspruch 11 oder 12, **dadurch gekennzeichnet,**
**dass** die Regeleinheit (µC20, Amp30) dazu ausgelegt ist, bei einem fehlenden Dimmsignal an dem Dimmanschluss (32) und/oder in dem Fall, dass kein externes Steuergerät an dem Dimmanschluss (32) angeschlossen ist, als Stromwert (Ireg) in dem zweiten Zustand (SII) den vorgebbaren Stromgrenzwert (Ilim) einzustellen.

## Claims

1. Circuit arrangement (10) for operating at least one first and one second LED string comprising:
- an input having a first (16) and a second input terminal (18) for coupling to a rectified AC supply voltage (12);
- a voltage compensation series impedance (24);
- a voltage divider device (26), which is connected between the first (16) and the second input terminal (18), for providing a control signal (28) to the voltage compensation series impedance (24);
- at least one first (100) and one second load subgroup (200) each having a first (102, 202) and a second terminal (104, 204) and a bypass element (120, 220), wherein the bypass element (120, 220) is connected in each case between the first and the second terminal, and the first (100) and the second load subgroup (200) has in each case one coupling element (110, 210) in the form of a four-terminal network having a first (106, 206) and a second primary terminal (108, 208) and having a first (112, 212) and a second secondary terminal (114, 214), wherein the first primary terminal (106, 206) is electrically conductively connected to the respective first terminal (102, 202) and the second primary terminal (108, 208) is electrically conductively connected to the respective second terminal (104, 204), wherein the first LED string (D101 to D156), which has a first number of series-connected LEDs, is connectable between the secondary terminals (112, 114) of the coupling element (110) of the first load subgroup (100), and the second LED string (D201 to D228), which has a second number of series-connected LEDs, is connectable between the secondary terminals (212, 214) of the coupling element (210) of the second load subgroup (200);
- a control device (20), which is designed to control the respective bypass element (120, 220) depending on a voltage difference between the respectively associated first terminal (102, 202) and a DC auxiliary voltage source (22), based on the second input terminal (18), of the circuit arrangement (10) and depending on a respective LED string voltage which is present between the respective first (102, 202) and the respective second terminal (104, 204) when the respectively associated bypass element (120, 220) blocks a short-circuit current flow between the respective first and second terminal (102, 104, 202, 204);
- wherein in each case the second terminal of a higher load subgroup, which is not a lowest load subgroup, is electrically conductively connected to the first terminal of a respectively next lower load subgroup, wherein the first terminal of a highest load subgroup is electrically coupled to the first input terminal (16), and the voltage compensation series impedance (24) is connected between the second terminal of a lowest load subgroup and the second input terminal (18),
**characterized**
**in that** the voltage divider device (26) is designed to drive the voltage compensation series impedance (24) by means of the control signal (28) in such a way that a current with a current value (Ireg) through the load subgroups (100, 200) coupled in series can be set, by means of the voltage compensation series impedance (24), to be proportional to a voltage value (Urect) of the rectified AC supply voltage (12) in a first state (SI) and to be equal to a presettable current limit value (Ilim) in a second state (SII), wherein the two states follow on from one another serially within a system half-cycle, and the voltage divider device (26) has a control terminal (27) for influencing, in particular limiting, the control signal (28), wherein the voltage divider device (26) has a first low-pass filter (R22, C22, R32, C32), which is coupled to the control terminal (27) on the output side and via which an analogue control signal or a PWM control signal can be coupled onto the control terminal (27).

2. Circuit arrangement (10) according to Claim 1,
**characterized**
**in that** each coupling element (110, 210) comprises a diode (D100, D200), which is connected between the first primary terminal (106, 206) and the first secondary terminal (112, 212) or between the second primary terminal (108, 208) and the second secondary terminal (114, 214), and a capacitor (C100, C200), which is connected between the first secondary terminal (112, 212) and the second secondary terminal (114, 214).

3. Circuit arrangement (10) according to one of the preceding claims,
**characterized**
**in that** the voltage divider device (26) is designed to in any case set, in interaction with the control device (20), the second state (SII) when the bypass element of the highest load subgroup (100) is switched off or when the two bypass elements of the highest (100) and the next lower load subgroup (200) are switched off.

4. Circuit arrangement (10) according to one of the preceding claims,
**characterized**
**in that** the voltage divider device (26) is designed to set the second state (SII) when the voltage value (Urect) of the rectified AC supply voltage (12) exceeds a presettable voltage limit value (Ulim).

5. Circuit arrangement (10) according to one of the preceding claims,
**characterized**
**in that** the presettable voltage limit value (Ulim) in a rated operational state of the circuit arrangement (10) is lower than a peak value of the AC supply voltage (Upk).

6. Circuit arrangement (10) according to one of the preceding claims,
**characterized**
**in that** the voltage compensation series impedance (24) has a first resistor (R5), which is electrically conductively connected to the second input terminal (18), and has the current through the load subgroups (100, 200) flowing through it.

7. Circuit arrangement (10) according to one of the preceding claims,
**characterized**
**in that** a current mirror (R5, Q1, Q2, R4, D2, D3) is formed by the voltage compensation series impedance (24) in conjunction with the voltage divider device (26).

8. Circuit arrangement (10) according to Claim 6,
**characterized**
**in that** the voltage divider device has a control unit (µC20, Amp30), which is electrically coupled to the control terminal (27), wherein an actual value input of the control unit is coupled to the first resistor (R5) via a second low-pass filter (R8, C8), in particular a two-stage second low-pass filter (R8, C8, R9, C9).

9. Circuit arrangement (10) according to Claim 8,
**characterized**
**in that** the control unit (µC20, Amp30) has an analogue amplifier component (Amp30) or a program-controlled arithmetic logic unit (µC20) for the closed-loop control of the voltage compensation series impedance (24).

10. Circuit arrangement (10) according to Claim 8 or 9,
**characterized**
**in that** the control unit (µC20, Amp30) is designed to set, by means of adapting the current limit value (Ilim), the mean value of the current flowing through the load subgroups (100, 200) to an unchanged or reduced value in the case of an increase in the AC supply voltage (12) and/or to an unchanged or increased value in the case of a reduction in the AC supply voltage (12).

11. Circuit arrangement (10) according to one of Claims 8 to 10,
**characterized**
**in that** the circuit arrangement (10) furthermore has a dimming terminal (32) for brightness control which is designed to provide a setpoint value to the control unit (µC20, Amp30) depending on a dimming signal which can be provided at the dimming terminal (32) by means of an external control device.

12. Circuit arrangement (10) according to Claim 11,
**characterized**
**in that** the control unit (µC20, Amp30) is designed to limit the current value (Ireg) to a current dimming value (Idim) both in the first state and in the second state (SII) depending on the setpoint value, wherein the current dimming value (Idim) assumes at most the value of the presettable current limit value (Ilim).

13. Circuit arrangement (10) according to Claim 11 or 12, **characterized**
**in that** the control unit (µC20, Amp30) is designed to set the presettable current limit value (Ilim) as the current value (Ireg) in the second state (SII) in the case of the lack of a dimming signal at the dimming terminal (32) and/or in the case where no external control device is connected to the dimming terminal (32).

## Revendications

1. Agencement de circuit (10) pour faire fonctionner au moins une première et une seconde ligne de DEL, comprenant :
- une entrée comportant un premier (16) et un second port d'entrée (18) destinés à être couplés à une tension d'alimentation alternative redressée (12) ;
- une impédance longitudinale d'équilibrage de tension (24) ;
- un dispositif diviseur de tension (26), qui est connecté entre le premier (16) et le second port d'entrée (18), pour fournir un signal de commande (28) à l'impédance longitudinale d'équilibrage de tension (24) ;
- au moins un premier (100) et un second sous-groupe de charge (200) avec respectivement un premier (102, 202) et un second port (104, 204) ainsi qu'un élément de pontage (120, 220), l'élément de pontage (120, 220) étant connecté respectivement entre le premier et le second port, et le premier (100) et le second sous-groupe de charge (200) présentant respectivement un élément de couplage (110, 210) réalisé sous forme de quadripôle avec un premier (106, 206) et un second port primaire (108, 208) ainsi qu'avec un premier (112, 212) et un second port secondaire (114, 214), le premier port primaire (106, 206) étant connecté de manière électriquement conductrice au premier port respectif (102, 202) et le second port primaire (108, 208) au second port respectif (104, 204), la première ligne de DEL (D101 à D156), présentant un premier nombre de DEL connectées en série, pouvant être connectée entre les ports secondaires (112, 114) de l'élément de couplage (110) du premier sous-groupe de charge (100), et la seconde ligne de DEL (D201 à D228), présentant un second nombre de DEL connectées en série, pouvant être connectée entre les ports secondaires (212, 214) de l'élément de couplage (210) du second sous-groupe de charge (200) ;
- un dispositif de commande (20), qui est conçu pour commander l'élément de pontage respectif (120, 220) en fonction d'une différence de tension entre le premier port (102, 202) associé respectif et une source de tension continue auxiliaire (22) de l'agencement de circuit (10), en relation avec le second port d'entrée (18), ainsi qu'en fonction d'une tension de ligne de DEL respective, qui est appliquée entre le premier port (102, 202) respectif et le second port (104, 204) respectif, lorsque l'élément de pontage (120, 220) associé respectif bloque un flux de courant de court-circuit entre les premier et second ports (102, 104, 202, 204) respectifs ;
- le second port d'un sous-groupe de charge situé plus haut, qui n'est pas un sous-groupe de charge situé le plus bas, étant connecté de manière électriquement conductrice au premier port d'un sous-groupe de charge voisin situé plus bas, le premier port d'un sous-groupe de charge situé le plus haut étant couplé électriquement au premier port d'entrée (16) et l'impédance longitudinale d'équilibrage de tension (24) étant connectée entre le second port d'un sous-groupe de charge situé le plus bas et le second port d'entrée (18),
**caractérisé en ce que**
le dispositif diviseur de tension (26) est conçu pour commander l'impédance longitudinale d'équilibrage de tension (24) au moyen du signal de commande (28) de telle sorte que, au moyen de l'impédance longitudinale d'équilibrage de tension (24), un courant avec une valeur de courant (Ireg) à travers les sous-groupes de charge (100, 200) couplés en série peut être réglé dans un premier état (SI) proportionnel à une valeur de tension (Urect) de la tension d'alimentation alternative redressée (12) et dans un second état (SII) égal à une valeur limite de courant (Ilim) prédéfinissable, les deux états étant consécutifs en série à l'intérieur d'une demi-onde de réseau, et le dispositif diviseur de tension (26) présentant un port de commande (27) pour influencer, en particulier limiter, le signal de commande (28), le dispositif diviseur de tension (26) présentant un premier filtre passe-bas (R22, C22, R32, C32), qui est couplé côté sortie au port de commande (27) et peut être couplé au port de commande (27) par l'intermédiaire d'un signal de commande analogique ou d'un signal de commande PWM (27).

2. Agencement de circuit (10) selon la revendication 1,
**caractérisé en ce que**
chaque élément de couplage (110, 210) comprend une diode (D100, D200) qui est connectée entre le premier port primaire (106, 206) et le premier port secondaire (112, 212) ou entre le second port primaire (108, 208) et le second port secondaire (114, 214), et un condensateur (C100, C200) qui est connecté entre le premier port secondaire (112, 212) et le second port secondaire (114, 214).

3. Agencement de circuit (10) selon l'une quelconque des revendications précédentes,
**caractérisé en ce que**
le dispositif diviseur de tension (26) est conçu pour, en coopération avec le dispositif de commande (20), régler le second état (SII) au moins lorsque l'élément de pontage du sous-groupe de charge (100) le plus élevé est connecté de manière bloquante ou lorsque les deux éléments de pontage du sous-groupe de charge (100) le plus élevé et du sous-groupe de charge (200)voisin situé plus bas sont connectés de manière bloquante.

4. Agencement de circuit (10) selon l'une quelconque des revendications précédentes,
**caractérisé en ce que**
le dispositif diviseur de tension (26) est conçu pour régler le second état (SII) lorsque la valeur de tension (Urect) de la tension alternative d'alimentation redressée (12) dépasse une valeur limite de tension (Ulim) prédéfinissable.

5. Agencement de circuit (10) selon l'une quelconque des revendications précédentes,
**caractérisé en ce que**
la valeur limite de tension prédéfinissable (Ulim) dans un état de fonctionnement nominal de l'agencement de circuit (10) est inférieure à une valeur de crête de la tension d'alimentation alternative(Upk) .

6. Agencement de circuit (10) selon l'une quelconque des revendications précédentes,
**caractérisé en ce que**
l'impédance longitudinale d'équilibrage de tension (24) présente une première résistance (R5), qui est reliée de manière électriquement conductrice au second port d'entrée (18), et est traversée par le courant à travers les sous-groupes de charge (100, 200).

7. Agencement de circuit (10) selon l'une quelconque des revendications précédentes,
**caractérisé en ce que**
un miroir de courant (R5, Q1, Q2, R4, D2, D3) est formé par l'impédance longitudinale d'équilibrage de tension (24) en liaison avec le dispositif diviseur de tension (26).

8. Agencement de circuit (10) selon la revendication 6,
**caractérisé en ce que**
le dispositif diviseur de tension présente une unité de régulation (µC20, Amp30) qui est couplée électriquement au port de commande (27), dans lequel une entrée de valeur réelle de l'unité de régulation est couplée à la première résistance (R5) par l'intermédiaire d'un second filtre passe-bas (R8, C8), en particulier d'un second filtre passe-bas à deux étages (R8, C8, R9, C9).

9. Agencement de circuit (10) selon la revendication 8,
**caractérisé en ce que**
l'unité de régulation (µC20, Amp30) présente un composant amplificateur analogique (Amp30) ou une unité de calcul commandée par programme (µC20) pour la régulation de l'impédance longitudinale d'équilibrage de tension (24).

10. Agencement de circuit (10) selon la revendication 8 ou 9,
**caractérisé en ce que**
l'unité de régulation (µC20, Amp30) est conçue pour, en ajustant la valeur limite de courant (Ilim), régler la valeur moyenne du courant circulant à travers les sous-groupes de charge (100, 200) à une valeur constante ou réduite lors d'une augmentation de la tension d'alimentation alternative (12) et/ou à une valeur constante ou accrue lors d'une réduction de la tension d'alimentation alternative (12).

11. Agencement de circuit (10) selon l'une quelconque des revendications 8 à 10,
**caractérisé en ce que**
l'agencement de circuit (10) présente en outre un port de gradation (32) pour une commande de la luminosité, qui est conçu pour fournir une valeur de consigne à l'unité de régulation (µC20, Amp30) en fonction d'un signal de gradation pouvant être fourni au moyen d'un appareil de commande externe sur le port de gradation (32).

12. Agencement de circuit (10) selon la revendication 11, **caractérisé en ce que**
l'unité de régulation (µC20, Amp30) est conçue pour limiter la valeur de courant (Ireg) à une valeur de gradation de courant (Idim) en fonction de la valeur de consigne, aussi bien dans le premier état que dans le second état (SII), la valeur de gradation de courant (Idim) prenant tout au plus la valeur de la valeur limite de courant (Ilim) prédéfinissable.

13. Agencement de circuit (10) selon la revendication 11 ou 12, **caractérisé en ce que**
l'unité de régulation (µC20, Amp30) est conçue pour régler la valeur limite de courant (Ilim) prédéfinissable en tant que valeur de courant (Ireg) dans le second état (SII) en cas d'absence de signal de gradation sur le port de gradation (32) et/ou dans le cas où aucun appareil de commande externe n'est relié au port de gradation (32).
